(19) Europäisches Patentamt

European Patent Office

Office européen des brevets

(11) **EP 1 619 367 A1**

(12) **EUROPEAN PATENT APPLICATION**

(43) Date of publication:
**25.01.2006 Bulletin 2006/04**

(51) Int Cl.:
*F02B 37/10* (2006.01)   *F02B 39/10* (2006.01)
*F02B 37/14* (2006.01)

(21) Application number: **04103436.4**

(22) Date of filing: **19.07.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(71) Applicant: **Ford Global Technologies, LLC, A subsidary of Ford Motor Company Dearborn, MI 48126 (US)**

(72) Inventor: **Petrovic, Simon 52072, Aachen (DE)**

(74) Representative: **Drömer, Hans-Carsten et al Ford-Werke Aktiengesellschaft, Patentabteilung NH/DRP, Henry-Ford-Strasse 1 50725 Köln (DE)**

(54) **Method and apparatus for controlling an electric booster of an internal combustion engine**

(57)    The invention relates to a method for controlling an electric booster installed on an internal combustion engine, which comprises a turbocharger. The electric booster is arranged upstream of the turbocharger compressor and activated for optimum electrical power consumption if a lugging mode is detected. Thus, driving convenience especially in alpine or mountainous regions can be improved.

Fig. 1

EP 1 619 367 A1

Printed by Jouve, 75001 PARIS (FR)

**Description**

FIELD OF THE INVENTION

The present invention relates to a method and an apparatus for controlling an electric booster of an internal combustion engine according to claim 1 and 7, respectively.

BACKGROUND OF THE INVENTION

Charging of an internal combustion engine is an efficient method for improving the performance and torque of the engine. Charging comprises the compressing of the air used for burning in the cylinder of the engine by means of a charger. Different kinds of chargers are known, such as mechanical chargers, exhaust turbochargers, or compression wave chargers. An exhaust turbocharger (in the following called turbocharger) uses the energy of the exhaust gases of an internal combustion engine in order to boost the pressure of the air entering an engine's cylinder. Turbochargers are mostly applied to diesel engines.

However, an engine with a turbocharger suffers from an important performance deficiency, which is also called the "turbo lag". The term "turbo lag" describes the effect that upon an acceleration demand from the driver, it takes the engine a little while to deliver full torque and thus the actual acceleration lags behind the driver demand. This delay of the torque delivery is caused by the fact that additional fuel required during the acceleration and injected into the cylinder can only be burned if sufficient air, which depends on the boost pressure, is present in the cylinder. The boost pressure, however, needs to be provided by the turbocharger which in turn draws its power from the exhaust gas energy. Without a control of fuel injection, the engines produces smoke components in its exhaust emissions during the "turbo lag". Therefore, a modern engine control unit limits the fuel injection during the presence of the "turbo lag" and the demanded torque cannot be delivered immediately. This circular dependence of fueling rate, exhaust gas energy, and available boost pressure mandates in practice that the increase in fueling rate is limited by the rate of boost pressure increase in order to ensure smoke-free combustion in transient operation. This fuel limiting is perceivable by the driver.

Since standard turbochargers are optimized for a specific operating point of an engine, variable geometry turbochargers (VGT charger) were developed. The characteristics of a VGT charger can be adapted, to some extent, to the current operating condition of an engine, e.g., in order to delimit the boost pressure under fuel load of the engine. Further, auxiliary boosting devices such as electrically driven compressors, mechanically driven compressors, or electrically assisted turbochargers can be applied to reduce the effects of the "turbo lag". In this disclosure, the term electric booster is used to any additional electrically driven boosting device, without loss of generality.

Especially in the case of driving in alpine or mountainous regions, in the case of towing a trailer or large vehicles on small but long inclines, such as agricultural vehicles, the engine can usually not provide the boost pressure, which is required and demanded by the driver. In such cases, the driver is usually at maximum pedal or wide open throttle (WOT) at a steady state engine operating point, e.g., third gear, 50kph, i.e., demands torque during an unfavorable condition of the engine. Such a case is called "lugging mode".

In order to prevent the "lugging mode", a driver must change the gear, which is rather inconvenient for the driver in alpine or mountainous regions where she/he has to constantly change gear in uphill and downhill driving conditions. In these cases, the incoming inlet air to the turbocharger is at atmospheric pressure only, .i.e., not boosted.

OBJECT OF THE INVENTION

It is an object of the present invention to provide a method and an apparatus for controlling an electric booster of an internal combustion engine which improve driving convenience.

This object is achieved by a method for controlling an electric booster of an internal combustion engine as claimed in claim 1 and a respective apparatus as claimed in claim 7. Preferred embodiments of the invention are specified in the dependent claims.

SUMMARY OF THE INVENTION

The main idea of the invention is to detect a "lugging mode" of an internal combustion engine and to control an electric booster depending on the detection. An electric booster can compress the air entering a turbocharger at a pressure ratio greater than one, thereby ensuring that there is more air entering the cylinders of the engine, so that more fuel can be burned and, therefore, more torque can be produced. According to this, the driver can stay in a higher gear for a longer period of time, rather than downshifting the gear, which makes driving much more convenient especially in alpine or mountainous regions. Known controllers for electric boosters only detect the "turbo lag" which usually only lasts a few seconds but they do not detect the "lugging mode" which can last much longer, namely some minutes.

The invention relates to method for controlling an electric booster installed on an internal combustion engine, which comprises a turbocharger. The electric booster is activated if a lugging mode of the engine is detected. By activating the electric booster during the lugging mode of the engine the above listed advantages can be achieved. Particularly, the driving convenience is significantly improved.

Particularly, the lugging mode is detected if a demanded manifold air pressure or manifold air flow exceeds a maximum available boost pressure available without assistance of the electric booster.

In a further step of the inventive method, the difference between the demanded manifold air pressure or manifold air flow and a measured manifold boost pressure or air flow can be determined.

In a preferred embodiment, it is determined whether the determined difference exceeds a predetermined threshold and a timer is started if the threshold is exceeded. The lugging mode can then be detected if the determined difference exceeds the predetermined threshold for a time period set by the timer.

In order to avoid any overload of the power net or of a car's battery (or batteries), the current of the electric booster can be limited based on a maximum speed demand upper limit and/or the electric current available on a power net.

Furthermore, the invention relates to an apparatus for controlling an electric booster of an internal combustion engine, which comprises a turbocharger. The apparatus is characterized by means for detecting a lugging mode of the engine and activating the electric booster depending on a detected lugging mode. In other words, the apparatus is adapted to detect a lugging mode of the engine and to control the electric booster depending on the detection of the lugging mode. Especially, the electric booster is activated if an operating point of the engine is in the lugging mode "area".

In a preferred embodiment, the means comprise a controller logic for generating a speed demand signal for controlling the speed of the electric booster based on an electric booster maximum speed demand upper limit signal, a constraint signal from an energy management module, an output signal of a corrected MAF cut-off point unit, an input MAF correction signal, and an output signal of a Min-Max detection unit.

Particularly, the controller logic implements a finite state machine for performing the method according to the invention an explained above.

According to a further aspect, the invention relates to an electronic control unit for an internal combustion engine, particularly a Diesel engine, wherein the unit comprises an apparatus according to the invention and as explained above.

The preferred application of the invention is a diesel engine, however, the invention can be applied equally to gasoline fuelled or other internal combustion engines for achieving the advantages of the invention. Also, even if it is assumed that an electric booster is located upstream of the turbocharger, the invention can also be implemented with an electric booster located downstream of the turbocharger.

Further advantages and features of the invention will become apparent from the following description of preferred embodiments of the invention.

BRIEF DESCRITPION OF THE DRAWINGS

The present invention will now be described, by way of example, with reference to the accompanying drawings, in which

Fig. 1    shows an embodiment of a flow chart of the method for controlling an electric booster of an internal combustion engine according to the invention;

Fig. 2    shows an embodiment of the block diagram of an apparatus for controlling an electric booster of an internal combustion engine according to the invention; and

Fig. 3    shows a state machine implemented in the controller of Fig. 2.

DETAILED DESCRIPTION OF PREFERRED EMBODIMENTS

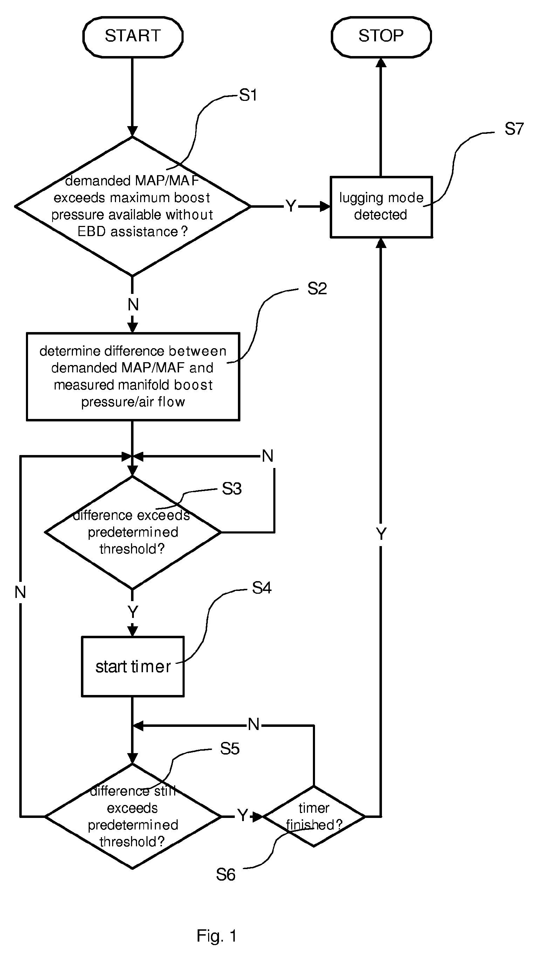

In Fig. 1, a flow chart of the method for controlling an electric booster of an internal combustion engine is shown. The method can be implemented in a electronic control unit (ECU) of an internal combustion engine, preferably a diesel engine, of an automobile. The torque and speed of the engine is controlled by a driver of the automobile by means of an accelerator pedal. By controlling the position of the pedal, the driver determines the engine's speed which is a function of the amount of injected fuel and the air flow or air pressure in the manifold of the engine. A turbocharger compresses the air in the manifold.

In order to detect a lugging mode of the engine, it is determined in a first step S1 of the shown algorithm, whether the manifold air pressure (MAP) or the manifold air flow (MAF) demanded by the driver exceeds the maximum boost pressure which is available without any assistance of an electric boost device. If the maximum boost pressure is exceeded, a lugging mode of the engine is detected, immediately (step S7).

Otherwise, the difference between the demanded MAP/MAF and the measured manifold boost pressure or air flow is determined in step S2. In a following step S3, it is checked whether the difference exceeds a predetermined threshold. If the difference does not exceed the threshold, the algorithm jumps back to step S3. If the difference exceeds the threshold, a timer is started in step S4 in order to determine the time for which the difference exceeds the threshold. If the threshold is exceeded for a time determined by the timer setting, a lugging mode of the engine is detected.

In detail, it is checked whether the difference still exceeds the predetermined threshold after starting the timer (step S5). If no, the algorithm jumps back to step S3. The timer is stopped (not shown). If yes, it is checked in step S6 whether the timer is finished. If the timer still runs, the algorithm jumps back to step S5, otherwise, a lugging mode is detected (step S7).

In contrast to the invention and the method explained above, a normal operating closed-loop control system will schedule the VGT turbocharger vane settings or waste gate demand (active case) depending on the difference between the driver demanded MAP (or MAF) and the measured manifold boost pressure (or air flow). This error will schedule the EBD demand under normal operating conditions.

However, if the difference between the driver demanded MAP and the maximum available boost pressure without any EBD assist at the current engine operating point is exceeded, then the lugging mode has been detected. The algorithm in Fig. 1 is shown in a simplified form; and it excludes, for example, hysteresis to prevent a lugging mode indicator flag from chattering.

Another criterion is to measure the time that the driver demanded MAP error has exceeded a certain threshold; if the timer exceeds a calibrateable limit, then the lugging mode indicator flag is set.

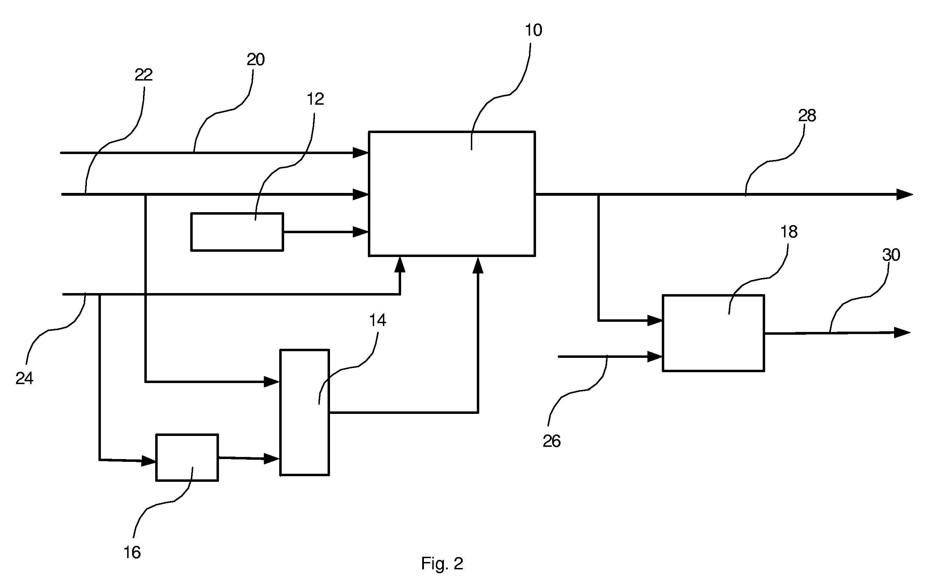

Fig. 2 shows a controller which runs in open-loop, in contrast, for example, to a closed-loop MAP- or MAF-based setup. The controller additionally runs for a longer period of time since the EBD is not required for the elimination of turbolag. Here, the main controller requirement is optimum efficiency, not system performance.

The controller logic 10 receives a hard limit EBD maximum speed demand upper limit via signal 20 (ebd_n_dmd_max) and a constraint from the energy management module (EMM) signal 22 (ebd_n_dmd_emm) which constrains the available electric current for the operation of the EBD in the presence of other electrical loads on the power net.

Furthermore, the controller logic 10 receives a signal from a corrected MAF cut-off point unit 12 (ebc_maf_corr_lug_read), an input MAF correction signal 24 (in_maf_corr), and a signal from a Min-Max detection unit 14 (ebd_n_dmd_lug_off).

The controller logic 10 calculates from the received signals a speed demand signal 28 for controlling the EBD, particularly the speed of the EBD. A lower speed limit signal 26 (ebd_n_dmd_pr_limit) is calculated such that a 5 kPa boost before the turbocharger compressor is observed, which is judged to be the minimum to be worth switching on the EBD, but this value can be calibrated. This assumes the EBD is placed upstream of the turbocharger compressor. If the EBD is placed downstream, a similar constraint calculation can be performed. Signals 26 and 28 are guided to an EXOR logic 18 which generates a lugging mode flag signal 30 (ebd_lug_flag). Signal 30 signals a lugging mode of the controlled engine and can be processed by ECU, for example.

The controller logic 10 can be implemented in hardware logic or in software which is processed by a microprocessor since all of the signals 20, 22, 24, 26 are digital. Also, the corrected MAF cut-off point unit 12, the Min-Max detection unit 14, the peak efficiency speed demand signal generator 16, and the EXOR logic 18 can be implemented in hardware logic or in software.

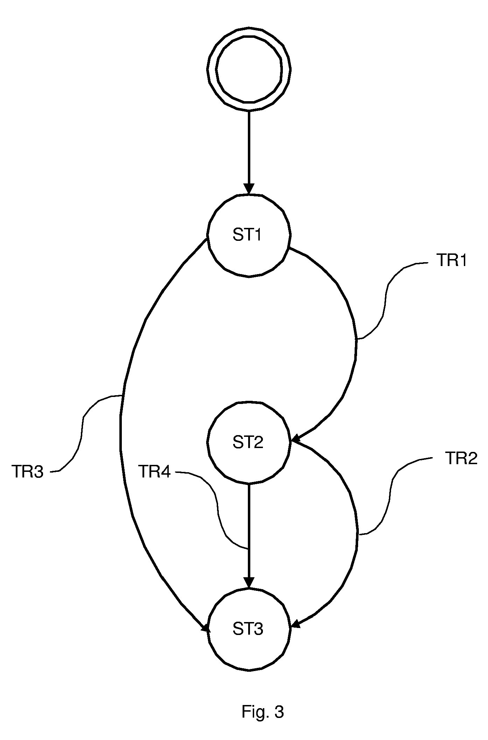

A finite state machine (FSM) which implements the corresponding controller logic is outlined in Fig. 3. The FSM can be implemented in hardware or as software. In the following description, the FSM is implemented as a computer program which is executed by a microcontroller or microprocessor of an ECU. The FSM starts with state ST1. From state ST1, the FSM can jump into state ST2 or state ST3. The condition TR1 for jumping into state ST2 written in pseudo code reads:

```
/* limited electrically by powernet (EMM) */

[ebd_n_dmd_emm < ebd_n_dmd_max]
```

This means that the FSM jumps into state ST2 if the above mentioned constraint of the EMM for limiting the electric current available for the operation of the EBD is exceeded by the maximum speed demand upper limit of the EBD. In such case, the EBD speed is limited by the conditions on the powernet of the engine.

The condition TR3 for jumping into state ST3 written in pseudo code reads:

```
/* else not limited by EMM */

/* run at maximum available ebooster speed */

/* which means maximum overall efficiency */

{

ebd_n_dmd_lug = ebd_n_dmd_max;

}
```

The FSM performs this jump if condition TR1 is not fulfilled, i.e., sufficient energy is available on the powernet for the EBD operation or the EMM does not limit the energy demand of the EBD.

From state ST2, the FSM can jump into state ST3 if condition TR2 is fulfilled. The condition TR2 written in pseudo code reads:

```
/* high MAF, just run at EMM constraint */

/* cannot find optimum efficiency point */

[in_maf_corr > ebc_maf_corr_lug]

{

ebd_n_dmd_lug = ebd_n_dmd_emm;

}
```

If condition TR2 is not fulfilled, the FSM jumps via condition TR4 into state ST3. The condition TR4 written in pseudo code reads:

```
/* else, select optimum efficiency point */

/* for a given corrected MAF */

{

ebd_n_dmd_lug = ebd_n_dmd_lug_eff;

}
```

The overall efficiency of the EBD is defined as

$$\eta_{TOTAL} = \frac{P_{compression}}{P_{electrical}}$$

If there are no speed constraint demands, e.g. if enough electrical energy on the power net is available, then the most efficient operating point occurs at the highest EBD speed.

If the EMM speed constraint is active, then the most efficient operating point is selected, depending on the current MAF. This will usually not be the point with the largest compression power (which is the highest current pressure ratio) since there is a compromise between the maximum available air compression power (which requires too much electrical energy) and a convenient air compression power, which results in a convenient vehicle driving torque (the driver does not need to change down a gear, but can keep the vehicle in the lugging mode for longer).

A preferred implementation of the overall algorithm written in pseudo code follows (/* ... */ denotes a comment):

```
/* Constrained mode */
IF limited by EMM THEN
        IF MAF high THEN
                /* No control over speed demand */
                demand the EMM constraint speed
        ELSE
                /* Select the most efficient point */
                EBD speed demand = f(MAF)
        END IF
ELSE
        /* Not constrained */
        demand the maximum EBD speed




                        END IF
```

A preferred embodiment of an algorithm for calculating the corresponding lugging mode flag written in pseudo code follows (/* ... */ denotes a comment):

```
/* Lug flag setting */
IF  current  calculated  lug  speed  >=  PR  lower  limit
(=f(MAF)) THEN
        lug flag TRUE
ELSE
        /* Do not use EBD, boost generated is too low*/
        lug flag FALSE
END IF
```

This flag is used as an exit condition from the lugging mode, in which case it is not worthwhile (in performance terms) to use the EBD, since the pressure pre (or post) turbocharger turbine is too low to create a discernible increase in engine torque.

The fuel consumption benefit between using the EBD with full available input power and at reduced power but with some driveability and convenience benefit can be illustrated by the following example. Supposing that the vehicle is running up a hill at 50 kph in the third gear at an engine speed below 2000 rpm. If the engine MAF is about 0.03 kg/s, then the comparison points are A (maximum overall efficiency) and B (maximum efficiency during constrained operation).

In the following, exemplary values are given for the two comparison point A and B:

Point A:

70000 rpm
Pressure ratio = 1.22
Input power $P_{input}$ = 1.3kW
Efficiency $\eta$ = 40%
Air compression power $P_{comp}$ = $\eta * P_{input}$ = 0.53kW

Point B:

40000 rpm
Pressure ratio = 1.055 (just on the limit for EBD usage)
Input power $P_{input}$ = 0.50kW
Efficiency $\eta$ = 28.5%
Air compression power $P_{comp}$ = $\eta * P_{input}$ = 0.14kW

Assuming that the same operating point for two minutes and fuel consumption (BSFC: brake specific fuel consumption) is about 220 g/kWhr, based on a Ford PUMA 2.4L turbocharged direct injection engine. Further assuming that the average fuel density is 0.835kg/l (see Bosch Automotive Handbook, 4th edition, 1996, page 238) and the distance traveled in this time period is 1.67 km. Hence, the energy difference over this period can be calculated by

$$\Delta E/[kWhr] = \frac{\int_0^{120} \Delta Pdt}{3600} = 0.0267$$

where $\Delta P$ is 1.3-0.5 = 0.8k W. Therefore, the overall saving in fuel consumption ($\Delta FC$) is

$$\Delta FC/[g] = \Delta E * BSFC = 5.87$$

or in different units $\Delta FC$ = 0.421/100km which is a significant FC benefit.

**Reference numerals**

| | |
|---|---|
| 10 | controller logic |
| 12 | corrected MAF cut-off point unit |
| 14 | Min-Max detection unit |
| 16 | peak efficiency speed demand signal generator |
| 18 | EXOR logic |
| 20 | EBD maximum speed demand upper limit signal |
| 22 | constraint signal from the EMM |
| 24 | input MAF correction signal |
| 26 | lower speed limit signal |
| 28 | speed demand signal |
| 30 | lugging mode flag signal |
| S1-S7 | method steps |

**Claims**

1. Method for controlling an electric booster installed on an internal combustion engine, which comprises a turbocharger, wherein the electric booster is activated if a lugging mode of the engine is detected.

2. Method according to claim 1,

**characterized in that**
the lugging mode is detected if a demanded manifold air pressure or manifold air flow exceeds a maximum available boost pressure available without assistance of the electric booster (S1).

3. Method according to claim 2,
**characterized in that**
the difference between the demanded manifold air pressure or manifold air flow and a measured manifold boost pressure or air flow is determined (S2).

4. Method according to claim 3,
**characterized in that**
it is determined whether the determined difference exceeds a predetermined threshold (S4) and a timer is started if the threshold is exceeded.

5. Method according to claim 4,
**characterized in that**
the lugging mode is detected if the determined difference exceeds the predetermined threshold for a time period set by the timer (S5, S6).

6. Method according to any of the preceding claims,
**characterized in that**
the current of the electric booster is limited based on a maximum speed demand upper limit and/or the electric current available on a power net.

7. Apparatus for controlling an electric booster of an internal combustion engine, which comprises a turbocharger,
**characterized by**
means (10, 12, 14, 16, 18) for detecting a lugging mode of the engine and activating the electric booster depending on a detected lugging mode.

8. Apparatus according to claim 7,
**characterized in that**
the means comprise a controller logic (10) for generating a speed demand signal (28) for controlling the speed of the electric booster based on an electric booster maximum speed demand upper limit signal 20, a constraint signal from an energy management module 22, an output signal of a corrected MAF cut-off point unit 12, an input MAF correction signal 24, and an output signal of a Min-Max detection unit 14.

9. Apparatus according to claim 7,
**characterized in that**
the controller logic 12 implements a finite state machine for performing the method according to any of the claims 1 to 6.

10. Electronic control unit for an internal combustion engine, particularly a Diesel engine, wherein the unit comprises an apparatus according to any of the claims 7 to 9.

START          STOP

S1

demanded MAP/MAF exceeds maximum boost pressure available without EBD assistance?

— Y →   S7

lugging mode detected

N

S2

determine difference between demanded MAP/MAF and measured manifold boost pressure/air flow

N

S3

difference exceeds predetermined threshold?

N

Y

S4

start timer

N

S5

difference still exceeds predetermined threshold?

— Y →

S6

timer finished?

Y

Fig. 1

Fig. 2

Fig. 3

**European Patent Office**

## EUROPEAN SEARCH REPORT

Application Number

EP 04 10 3436

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 426 581 A (TOYOTA MOTOR CO LTD) 9 June 2004 (2004-06-09) * paragraph [0028] - paragraph [0051]; figures 1,2a,2b * | 1-3,6-8, 10 | F02B37/10 F02B39/10 F02B37/14 |
| X | DE 101 45 038 A (BOSCH GMBH ROBERT) 3 April 2003 (2003-04-03) * paragraph [0012] - paragraph [0033]; figures 1-4 * | 1-3,7,8, 10 | |
| X | US 6 205 787 B1 (HALIMI EDWARD M ET AL) 27 March 2001 (2001-03-27) * column 5, line 18 - column 7, line 48; figures 2-4 * | 1,7,10 | |
| A | EP 0 367 406 A (ISUZU MOTORS LTD) 9 May 1990 (1990-05-09) * column 1, line 22 - column 6, line 28; figures 1,2 * | 1,4,5,7, 10 | |
| A | EP 0 352 064 A (ISUZU CERAMICS RES INST CO) 24 January 1990 (1990-01-24) * column 5, line 46 - column 9, line 48; figures 1,2a,2b * | 1-3,7,10 | TECHNICAL FIELDS SEARCHED (Int.Cl.7) F02B F02D |

The present search report has been drawn up for all claims

| Place of search | Date of completion of the search | Examiner |
|---|---|---|
| The Hague | 14 December 2004 | Nobre, S |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 04 10 3436

This annex lists the patent family members relating to the patent documents cited in the above-mentioned European search report.
The members are as contained in the European Patent Office EDP file on
The European Patent Office is in no way liable for these particulars which are merely given for the purpose of information.

14-12-2004

| Patent document cited in search report | | Publication date | Patent family member(s) | | Publication date |
|---|---|---|---|---|---|
| EP 1426581 | A | 09-06-2004 | JP | 2004169629 A | 17-06-2004 |
| | | | EP | 1426581 A1 | 09-06-2004 |
| | | | US | 2004093867 A1 | 20-05-2004 |
| DE 10145038 | A | 03-04-2003 | DE | 10145038 A1 | 03-04-2003 |
| | | | WO | 03027464 A1 | 03-04-2003 |
| | | | EP | 1427929 A1 | 16-06-2004 |
| US 6205787 | B1 | 27-03-2001 | US | 6029452 A | 29-02-2000 |
| | | | AU | 8659998 A | 23-04-1999 |
| | | | BR | 9813232 A | 29-08-2000 |
| | | | CN | 1439800 A | 03-09-2003 |
| | | | CN | 1439801 A | 03-09-2003 |
| | | | CN | 1107794 B | 07-05-2003 |
| | | | EP | 1042595 A1 | 11-10-2000 |
| | | | JP | 2001518590 T | 16-10-2001 |
| | | | WO | 9917008 A1 | 08-04-1999 |
| | | | AU | 7599096 A | 05-06-1997 |
| | | | BR | 9611556 A | 29-06-1999 |
| | | | EP | 0861370 A1 | 02-09-1998 |
| | | | JP | 2000500544 T | 18-01-2000 |
| | | | US | 6141965 A | 07-11-2000 |
| | | | WO | 9718388 A1 | 22-05-1997 |
| EP 0367406 | A | 09-05-1990 | JP | 2008382 C | 11-01-1996 |
| | | | JP | 2123243 A | 10-05-1990 |
| | | | JP | 7015263 B | 22-02-1995 |
| | | | DE | 68907016 D1 | 15-07-1993 |
| | | | DE | 68907016 T2 | 23-09-1993 |
| | | | EP | 0367406 A2 | 09-05-1990 |
| | | | US | 4981017 A | 01-01-1991 |
| EP 0352064 | A | 24-01-1990 | JP | 2030924 A | 01-02-1990 |
| | | | JP | 2526100 B2 | 21-08-1996 |
| | | | DE | 68902799 D1 | 15-10-1992 |
| | | | DE | 68902799 T2 | 14-01-1993 |
| | | | EP | 0352064 A1 | 24-01-1990 |
| | | | US | 4958497 A | 25-09-1990 |
| | | | US | 5105624 A | 21-04-1992 |

EPO FORM P0459

For more details about this annex : see Official Journal of the European Patent Office, No. 12/82